# EUROPEAN PATENT APPLICATION

(11) **EP 2 674 642 A1**
(43) Date of publication of application: **18.12.2013**
(21) Application number: 12183381.8
(22) Date of filing: 06.09.2012
(51) Int. Cl.: F16H 49/00

(54) **Harmonic drive with stationary gear**

(30) Priority: 14.06.2012 TW 101211508
(71) Applicant: Harmonic Innovation Technology Co., Ltd., Taipei City 110 (TW)
(72) Inventor: Yeh, Chun-Shen, 110 Taipei City (TW)
(74) Representative: Gee, Steven William

(57) **Abstract**

A harmonic reducer with a stationary gear includes a stationary gear, a circular spline, a flexspline and a wave generator. The wave generator is assembled with the flexspline and a power source, and then the flexspline is assembled with the stationary gear and the circular spline. The flexspline is deformed when assembled, so the external gear thereof partially engages the first internal gear of the stationary gear and the second internal gear of the circular spline. The stationary gear is fixed, so when the power source drives the wave generator to rotate, the flexspline deforms but does not rotate in relative to the stationary gear. In relative to the circular spline, the flexspline both deforms and rotates relatively, so the circular spline and the output shaft rotate in a reducing speed simultaneously.

## Description

### BACKGROUND OF THE INVENTION

### 1. Field of the Invention

The present invention relates to a harmonic reducer, more particular, relates to a fitting structure thereof where the stationary gear and the flexspline do not rotate relatively when engaged.

### 2. The Prior Arts

The harmonic reducer is a gear drive which uses flexible components to generate flexible mechanical wave to transmit power and motion. It is also called a "harmonic gear drive" (also known as the harmonic drive).

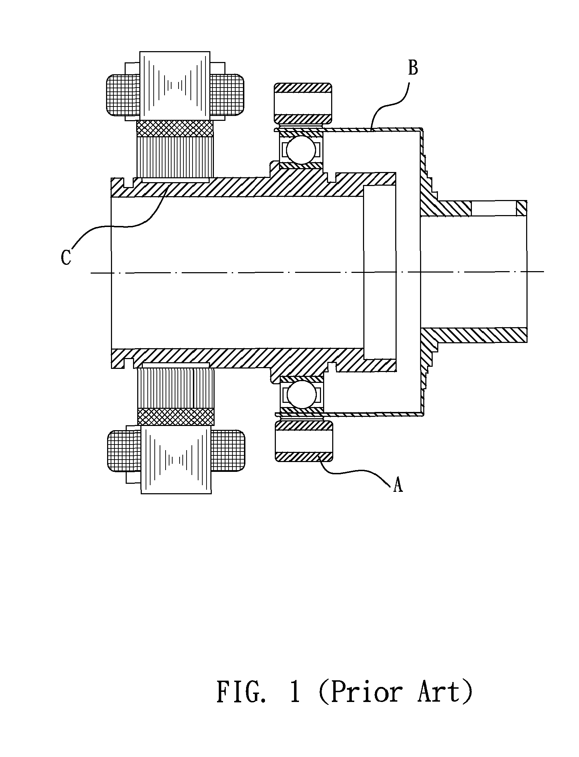

Fig. 1 shows the structure of a conventional harmonic reducer which comprises three components: a circular spline A which disposes an internal gear, a flexspline B which disposes an external gear and a wave generator C. When the harmonic drive functions as a reducer, the conventional type of operation is to set the circular spline A as stationary, the wave generator C as active operating and the flexspline B as the power output.

Flexspline B is a thin-walled gear which has a greater range of elastic deformation, where the inner diameter is equal or slightly larger than the total outer diameter of the wave generator. The wave generator C is a component which can elastically deform the flexspline B within a controllable range. The wave generator C disposes a central axis, wherein the central axis is installed with a deformable rolling bearing to form a roller. The wave generator C is then assembled inside the flexspline B so the outer wall of the wave generator C and the inner wall of the flexspline B are compressed against each other tightly. The wave generator C is connected to a power source which is typically a motor. When the wave generator C is installed into the flexspline B, the flexspline is forced from the round shape into an oval shape. The external gear on the two ends of the long axis of the oval are further pushed to be completely engaged with the internal gear of the circular spline A, whereas the external gear near the two ends of the short axis are completely disengaged with the internal gear of the circular spline. The rest of the external gear on other parts of the perimeter is in a transition state between engaged and disengaged. When the wave generator rotates continuously, the deformation of the flexspline also changes continuously, whereas the engaging state between the flexspline B and circular spline A also changes simultaneously. The cycle of the engagement starts from engaging in, engaged, engaging out, disengaged and then repeats onwards so the flexspline slowly rotates in the opposite direction of the wave generator C in relative to the circular spline.

During the driving process, the number of times a point on flexspline B deforms during one revolution of the wave generator is defined as the wave number n. The most widely used drive type is the double wave drive due to its smaller flexspline stress, simpler structure and a greater drive ratio. The pitches of the gears in the flexspline and circular spline of the harmonic gear drive are the same, but the numbers of the gear teeth are not.

When the circular spline is fixed, the wave generator is rotated and the flexspline is driven to rotate. The drive ratio of the harmonic gear drive is equal to: i=-B1/(A1-B1), where A1 and B1 are the number of gear teeth of the circular spline A and the flexspline B, respectively.

Due to the high number of the flexspline gear teeth, the harmonic gear drive can acquire a large drive ratio.

Because of the surface contact between the gear tooth and the high number of simultaneously engaged gear teeth, the harmonic reducer has the advantages of a smaller load per unit area and a higher bearing capacity compared to other drive types during the harmonic drive process. The harmonic reducer also has the benefit of a large drive ratio, where the drive ratio of a single stage harmonic gear drive can be i=70∼500. Furthermore, The harmonic reducer has the advantages of a small size, light weight, high drive efficiency, long life, high stability, impact free, low noise and high motion accuracy; therefore, the harmonic reducer has a wide range of applications.

However, during the drive process of the reducer, the flexspline needs to endure a larger alternating load which causes the flexspline to be damaged easily. In this case, the required fatigue strength, and the required technique level of process and heat treatment of the flexspline material are higher. The processing technique is also more complex.

In addition, in the conventional harmonic reducer, the distance D between the output shaft and the engaging location of circular spline and flexspline is greater, which can cause the sway due to different axis and the increase of heat and noise due to friction.

In order to solve the previous mentioned problems, Taiwan Patent Registration No. 101210934 filed by the present applicant disclosed a harmonic reducer, which has the wave generator thereof assembled with the flexspline and a power source, so the flexspline deforms and engages with the circular spline partially. The flexspline is fixed while the circular spline is connected to an output shaft. When the power source drives the wave generator to rotate, the flexspline also drives the circular spline and the output shaft to rotate simultaneously.

However, in the conventional harmonic reducer, only the circular spline and the flexspline are coordinated. When the circular spline is fixed for the flexspline to generate output, the flexspline is in a hat-shaped or cup-shaped structure. During the driving process of the reducer, the flexspline needs to endure a larger alternating load which causes stresses to generate in the bending area so the flexspline is easily damaged. Consequently, the required fatigue strength of the flexspline material is higher, the processing and the heat treatment technique are higher and the process technology is also more complex. In addition, the distance between the output shaft and the engaging location of the circular spline and the flexspline is long; therefore the sway due to different axis occurs easily and the heat and noise generated from friction are also increased.

Furthermore, when fixing the flexspline for the circular spline to generate output, a fixing flange is added to the flexspline, or mounting holes are added on the flexspline. Nontheless, these changes can cause stress to happen near the bending area and the mounting holes, which leads to low fatigue strength of the flexspline, and further causes the spline to rupture.

### SUMMARY OF THE INVENTION

A primary object of the present invention is to improve the fitting structure of the flexspline and the circular spline in the conventional harmonic reducer. During the driving process, the flexspline needs to endure a larger alternating load, and internal stress also occurs in the flexspline structure. Both facts can shorten the life of the flexspline, and the high number of component parts also causes the high production cost.

The present invention provides a harmonic reducer with a stationary gear, which characterized in the fact that a stationary gear is added to the reducer, and the flexspline is coordinated with the stationary gear and the circular spline simultaneously. When the power source drives the flexspline to rotate, there is no difference in the relative velocity between the flexspline and the stationary gear, thus the flexspline is provided with an additional stable support. The flexspline is deformed but does not rotate, and also generates a difference in the relative velocity between the flexspline and the circular spline when engaged. The circular spline is therefore provided with a reducing rotating effect, so the output shaft connected to the circular spline is rotating in a reducing speed.

The harmonic reducer with stationary gear provided in the disclosure comprises a stationary gear, a circular spline, a flexspline and a wave generator. The stationary gear and the circular spline dispose a first internal gear and a second internal gear correspondingly, while the flexspline disposes an external gear. The number of gear teeth of the external gear is equal to the number of gear teeth of the first internal gear but not the second internal gear. The wave generator is assembled with the flexspline and a power source, and then the flexspline is assembled with the stationary gear and the circular spline. The flexspline is deformed when assembled, so the external gear thereof partially engages the first internal gear of the stationary gear and the second internal gear of the circular spline. The stationary gear is fixed, so when the power source drives the wave generator to rotate, the flexspline deforms but does not rotate in relative to the stationary gear. In relative to the circular spline, the flexspline both deforms and rotates relatively, so the circular spline and the output shaft rotate in a reducing speed simultaneously.

The stationary gear and the circular spline of the present invention are abutting against each other, wherein the flexspline is coordinated with the stationary gear and the circular spline which are axially linked.

With the previously described structure, during the driving process of the harmonic reducer of the present invention, the loading on the gears can be spread out evenly so the loading can be lowered and the force applied can be more even; thereby the noise and the gear wear can be reduced to prolong the life of use, and the number of the components can also be decreased to lower the production cost.

### BRIEF DESCRIPTION OF THE DRAWINGS

The present invention will be apparent to those skilled in the art by reading the following detailed description of a preferred embodiment thereof, with reference to the attached drawings, in which:

Fig. 1 is a plane section view showing the structure of a conventional harmonic reducer.

Fig. 2 is an exploded perspective view showing the assembling relations between each elements of the harmonic reducer of the present invention.

Fig. 3 is a plane section view showing the structure of the harmonic reducer of the present invention.

Fig. 4 is a plane schematic view showing one end of the harmonic reducer of the present invention.

### DETAILED DESCRIPTION OF THE PREFERRED EMBODIMENT

An embodiment of the present invention will be described in details with reference to the drawings so that this disclosure is thorough and fully conveys the concept of the invention to those who skilled in the art.

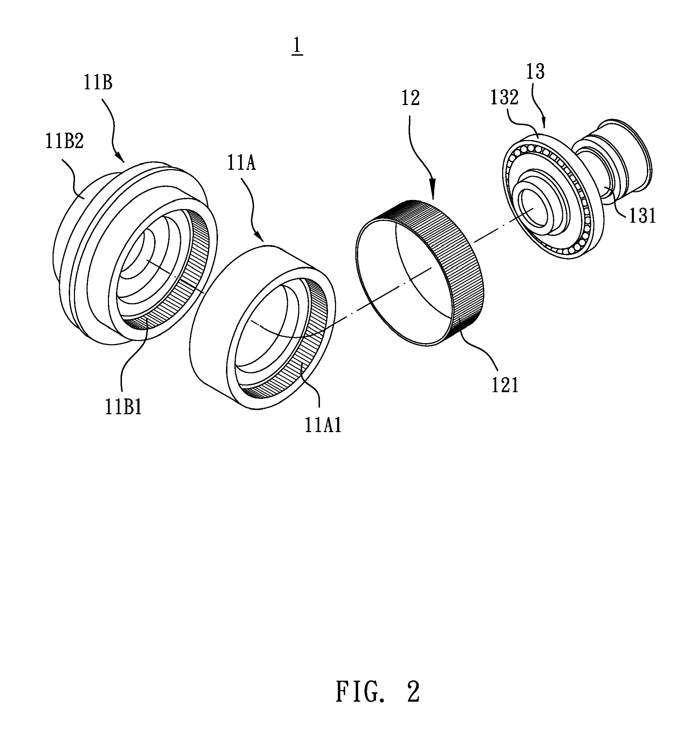

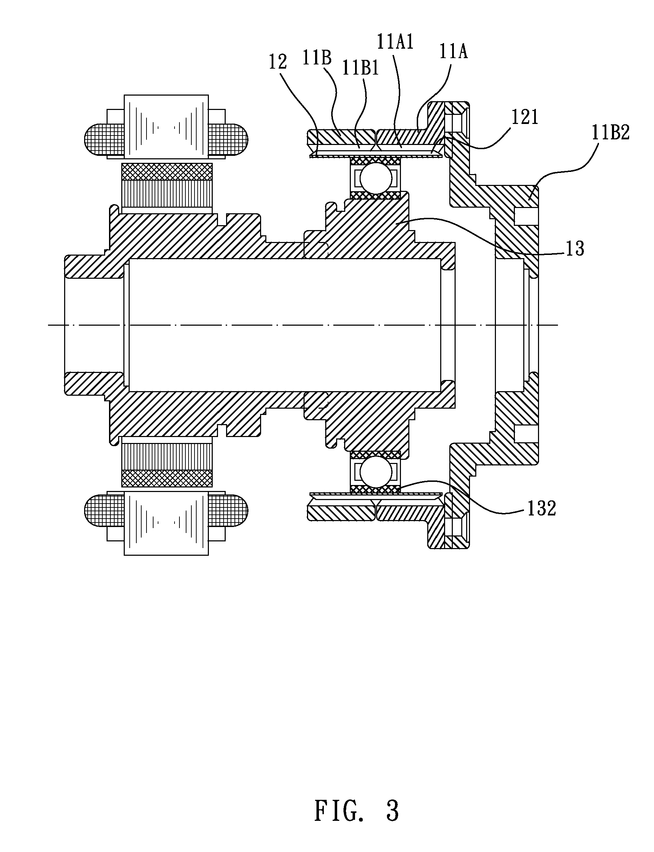

As shown in Fig. 2 and Fig. 3, the harmonic reducer with stationary flexspline 1 provided in the present invention comprises a stationary spline 11A, a circular spline 11B, a flexspline 12 and a wave generator 13. The stationary spline 11A and the circular spline 11B both dispose an internal space, wherein a first internal gear 11A1 composed of a plurality of first internal gear tooth is formed in the inner circumferential wall of the stationary gear 11A, and a second internal gear 11B1 composed of a plurality of second internal gear tooth is formed in the inner circumferential wall of the circular spline 11B. The circular spline 11B is axially connected to an output shaft 11B2. The stationary gear 11A and the circular spline 11B are abutted axially against each other, and then the stationary gear 11A is mounted to the casing of the reducer (not shown in graph). The circular spline 11B can rotate relatively to the stationary gear 11A.

The flexspline 12 is a thin-walled cylinder manufactured from tubular material with suitable thickness, or is a thin-walled cylinder made from forging and lathing process. The outer circumferential surface is then shaped into external gear 121 with a gear hobbing machine. The number of the gear teeth of the external gear 121 is equal to the number of the gear teeth of the first internal gear 11A1 in the stationary 11A, but not to the second internal gear 11B1 in the circular spline 11B. In other words, there is a difference in the number of gear teeth between the first internal gear 11A1 and the second internal gear 11B1. The flexspline 12 is then assembled in the internal space of the stationary gear 11A and the circular spline 11B.

The wave generator 13 of the present invention is a deformable bearing which disposes a central axis 131 and an outer ring 132, wherein the central axis 131 is an oval that is close to a circle in shape so the mutual rotation is allowed between the outer ring 132 and the central axis 131. The central axis is connected to a power source (not shown in graph) which is normally a motor.

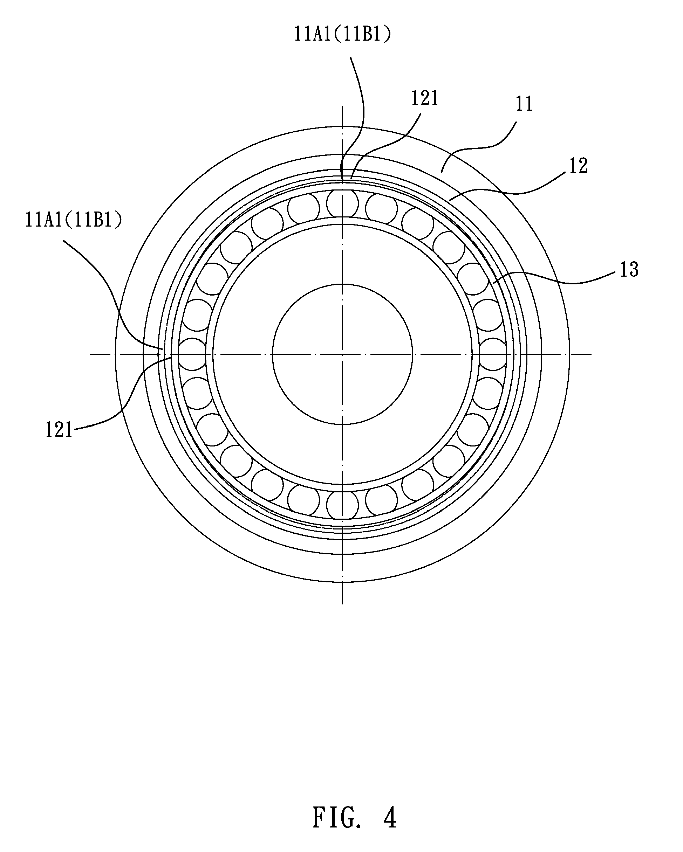

The assembling method of each components of the harmonic reducer in the present invention will be described next. First, the flexspline 12 is assembled in the internal space of the stationary gear 11A and the circular spline 11B which are axially abutted, and the wave generator 13 is installed in the inner perimeter of the flexspline 12. The flexspline 12 is a thin-walled gear which can be greater elastically deformed, and the inner diameter of the flexspline 12 is equal or slightly greater than the total outer diameter of the wave generator 13, while the wave generator 13 is a component which can deforms the flexspline elastically in a controllable range. When the wave generator 13 is installed into the flexspline 12, the ends of the flexspline 12 is forced from the circular shape into an oval shape (as shown in Fig. 4). The external gear 121 near the two ends of the long axis of the oval is further pushed and engages with the first internal gear 11A1 of the stationary gear 11A and the second internal gear 11B1 of the circular spline 11B completely, whereas the external gear near the two ends of the short axis of the oval is completely disengaged with the first internal gear of the stationary gear and the second internal gear of the circular spline. The rest of the external gear on the other parts of the perimeter is in a transition state between engaged and disengaged with the first internal gear 11A1 of the stationary gear 11A and the second internal gear 11B1 of the circular gear 11B. When the wave generator 13 rotates continuously, the deformation of the flexspline 12 changes continuously, so the engaging status of flexspline 12, the stationary gear 11A and the circular spline 11B also changes constantly. The cycle of the engagement starts from engaging in, engaged, engaging out, disengaged and then repeats onwards so the flexspline 12 slowly rotates in the same direction of the wave generator 13 in relative to the circular spline 11B.

Due to the equivalent number of gear teeth between the external gear 121 of the flexspline 12 and the first internal gear 11A1 of the stationary gear 11A, the flexspline 12 deforms but does not rotate in relative to the stationary gear 11A, which means there is no difference of the relative rotation speed between the flexspline 12 and the stationary gear 11A. However, the number of gear teeth between the flexspline 12 and the second internal gear 11B1 of the circular spline 11B are not equal, thus the flexspline 12 deforms and rotates in relative to the circular spline 11B, which means a difference in the relative rotation speed will occur between the flexspline 12 and the circular spline 11B. The output shaft 11B2 connected to the circular spline B is then rotating in a reducing speed.

With the previously described structure, during the driving process of the harmonic reducer of the present invention, the loading on the gears can be spread out evenly so the loading can be lowered and the force applied can be more even; thereby the noise and the gear wear can be reduced to prolong the life of use, and the number of the components can also be decreased to lower the production cost.

The preferred embodiment described above is disclosed for illustrative purpose but to limit the modifications and variations of the present invention. Thus, any modifications and variations made without departing from the spirit and scope of the invention should still be covered by the scope of this invention as disclosed in the accompanying claims.

## Claims

1. A harmonic reducer with a stationary gear, comprising:
a stationary gear, which disposes an internal space, wherein a first internal gear forms in the inner circumferential wall of the internal space; and
a circular spline, which disposes an internal space, wherein a second internal gear forms in the inner circumferential wall of the internal space, and the circular spline is connected to an output shaft; and
a flexspline, which is a thin-walled cylinder, wherein an outer circumferential surface of the flexspline forms an external gear, the number of the external gear teeth is equal to the number of the first internal gear teeth but not the second internal gear teeth, the flexspline is then assembled with the stationary gear and the circular spline; and
a wave generator, which is assembled in the inner circumference of the flexspline to deform the flexspline and to partially engage the external gear with both the first and the second internal gear simultaneously; the wave generator is connected with a power source to be driven to rotate, and the wave generator further drives the circular spline and the output shaft to rotate.

2. The harmonic reducer with a stationary gear as claimed in Claim 1, wherein the stationary gear and the circular spline are abutting against each other.
